# EUROPEAN PATENT APPLICATION

(11) **EP 1 927 960 A1**
(43) Date of publication of application: **04.06.2008**
(21) Application number: 07121719.4
(22) Date of filing: 28.11.2007
(51) Int. Cl.: G08G 1/09, G08G 1/0962, G09B 29/10

(54) **Traffic information receiver, storage medium of the same, and method for processing traffic information**

(30) Priority: 30.11.2006 KR 20060119877
(71) Applicant: LG Electronics, Inc., Seoul 150-721 (KR)
(72) Inventor: Lee, Il-Sang, 451-713, Pyeongtaek-si (KR)
(74) Representative: Vossius & Partner

(57) **Abstract**

A storage medium for a traffic information receiver stores data to be used for analysis of a traffic information message. The storage medium has location information including: a header field for recording address information of stored data and basic information of the data; a location code field for recording information about a location code of the data; a road information field for recording information of a corresponding road; a district information field for recording district information of the road; a local point information field for recording data about the location of the road; and a name information field for recording information about a name and a local area of the road. The storage medium can store search-requiring data according to one established classification standard, minimize repetition in storage of data, and reduce load to a memory of a receiver.

## Description

The present invention relates to a radio receiver for receiving a traffic information message transmitted through a radio wave and recognizing information from the message, a storage medium of the radio receiver for storing data used to recognize the information, and a method for recognizing the information from the message.

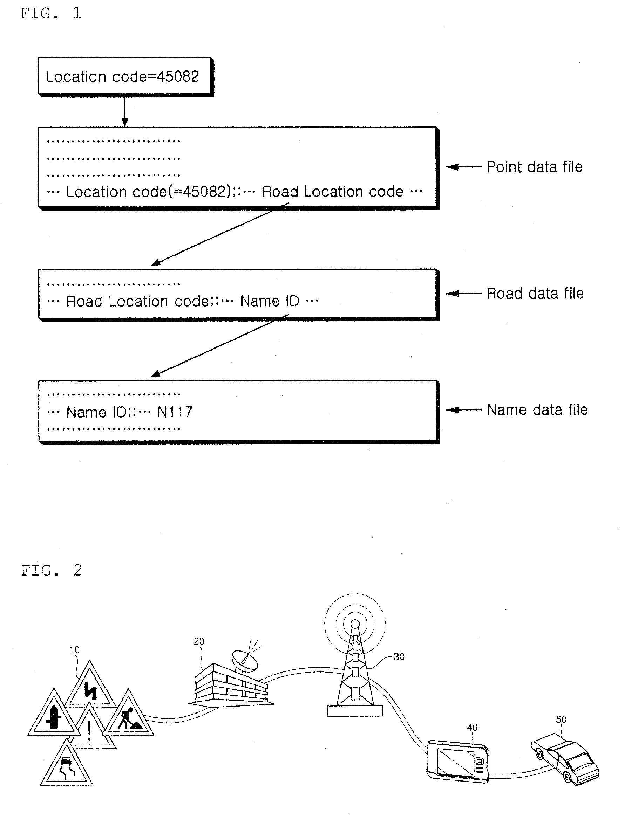

FIG. 1 is a flow diagram illustrating an example of a method for information search by a related art traffic information receiver.

As shown in FIG. 1, when the related art traffic information receiver has received a traffic information message, the receiver obtains information on roads contained in the message through multiple steps of data search and processing.

That is to say, as in the illustrated example, when a location code (location code of 45082 in the illustrated example) is input, the receiver searches a local point data file and then finds a road location code value corresponding to the location code. Then, the receiver searches a road data file by using the road location code and finds a name identifier (ID) corresponding to the road location code. The receiver can use the found name ID in order to search a name data file and then recognize the name of the road.

However, according to this method, the receiver must examine a plurality of files in whole in order to recognize the name of the road. Further, in order to analyze the traffic information message, it is necessary to know various types of other information as well as the name of the road. Therefore, the receiver must repeatedly search the data files in order to obtain necessary information whenever the traffic information message is input.

Therefore, the related art as described above has the following problems.

First, as the number of data files and the number of data items included in the data files increase, the size of the data files increases. As a result, such an increase in the size of the data files may impose too large a load on the memory of the traffic information receiver, which must store map information for navigation and data files for analysis of the traffic information message with a limited memory capacity.

Further, the related art receiver must perform multiple steps of data search and processing in order to analyze the traffic information message. Therefore, the related art receiver requires increased time for processing the received traffic information message and cannot instantly display the received traffic information message.

Accordingly, the present invention proposes a solution for providing data in order to provide concise and synthetic location information for a terminal that receives and processes traffic information.

In accordance with an aspect of the present invention, there is provided a storage medium for a traffic information receiver, which stores data to be used for analysis of a traffic information message, the storage medium including location information, which includes: a header field for recording address information of stored data and basic information of the data; a location code field for recording information about a location code of the data; a road information field for recording information of a corresponding road; a district information field for recording district information of the road; a local point information field for recording data about the location of the road; and a name information field for recording information about a name and a local area of the road.

The header field may include: a country identification information section for storing country identification codes of countries; a table code information section indicating the type of the stored data; a country location code information section for storing the number of codes included in each corresponding country; and an address information part for recording locations at which the data are stored.

The address information part may include: a location code address section for recording locations at which location codes are stored; a road information address section for recording locations at which road information is stored; a district information address section for recording locations at which district information is stored; a local point information address section for recording locations at which local point information is stored; and a name information address section for recording locations at which name information is stored.

The location code field may include: a location code section for storing location code information; a class section for identifying the type of stored data; and an index section for storing index information of the stored data.

The road information field may include: a location code section for storing location code information; a road number section for storing a number given to each road; a road location section for storing a location of a corresponding road; an access road location section for storing a location of an access road to the corresponding road; and an exit road location section for storing a location of an exit road from the corresponding road.

The district information field may include: a location code section for storing location code information; a backward location code section for storing location code information of a district in an opposite direction of a corresponding position; a forward location code section for storing location code information of a district in a same direction of the corresponding position; a road location code section for storing code information of a currently input road position; a district location code section for storing district location code information of the currently input road position.

The district information field may further include: a road number section for storing a number given to each road; a road location section for storing a location of a corresponding road; an access road location section for storing a location of an access road to the corresponding road; and an exit road location section for storing a location of an exit road from the corresponding road.

The local point information field may include: a location code section for storing location code information; a road location code section for storing code information of a currently input road position; a district location code section for storing district location code information of the currently input road position; a latitude section for storing latitude information of each local point; a longitude section for storing longitude information of each local point.

The local point information field may further include: a backward location code section for storing location code information of a district in an opposite direction of a corresponding position; a forward location code section for storing location code information of a district in a same direction of the corresponding position; a road number section for storing a number given to each road; a road location section for storing a location of a corresponding road; and an access road location section for storing a location of an access road to the corresponding road.

The name information field may include: a country identification information section for storing country identification codes of countries; a language identification information section for storing data of languages used for the countries; a local area identification information section for storing local area information; a name section for storing name information of a corresponding road, district, and local point; and a length information section for storing a length of the data stored in the name section.

The location data may be stored in a format of a table, which includes a header field, a location code field, a road information field, a district information field, a local point information field, and a name information field.

In accordance with another aspect of the present invention, there is provided a traffic information receiver for receiving and analyzing a traffic information message and reporting the traffic information message to a user, the traffic information receiver including: a reception module for receiving a radio signal; a memory for storing information data corresponding to the received signal; and a controller for searching for information data corresponding to the received signal in the memory and reporting the information data to the user, wherein the information data includes location data, which includes: a header field for recording address information of stored data and basic information of the data; a location code field for recording information about a location code of the data; a road information field for recording information of a corresponding road; a district information field for recording district information of the road; a local point information field for recording data about the location of the road; and a name information field for recording information about a name and a local area of the road.

The header field may store: country identification codes of countries; table code information indicating the type of the stored data; country location code information corresponding to the number of codes included in each corresponding country; and address information of stored data.

The address information may include location codes, road information, district information, local point information, and name information.

The location code field may store: location codes indicating location code information; classes indicating the type of stored data; and indexes of the stored data.

The road information field may store: location codes indicating location code information; road numbers corresponding to roads; a location of a corresponding road; a location of an access road to the corresponding road; and a location of an exit road from the corresponding road.

The district information field may store: location codes indicating location code information; a backward location code indicating location code information of a district in an opposite direction of a corresponding position; a forward location code indicating location code information of a district in a same direction of the corresponding position; a road location code corresponding to a currently input road position; and a district location code indicating district location code information of the currently input road position.

The district information field may further store: road numbers corresponding to roads; a location of a corresponding road; a location of an access road to the corresponding road; and a location of an exit road from the corresponding road.

The local point information field may store: location codes indicating location code information; a road location code corresponding to a currently input road position; and a district location code indicating district location code information of the currently input road position; latitude information of each local point; and longitude information of each local point.

The local point information field may further store: a backward location code indicating location code information of a district in an opposite direction of a corresponding position; a forward location code indicating location code information of a district in a same direction of the corresponding position; road numbers corresponding to roads; a location of a corresponding road; and a location of an access road to the corresponding road.

The name information field may store: country identification codes of countries; language identification information indicating data of languages used for the countries; local area identification information corresponding to local area information; name information of a corresponding road, district, and local point; and information about a length of the name information.

In accordance with another aspect of the present invention, there is provided a traffic information message processing method for receiving and analyzing a traffic information message and reporting the traffic information message to a user, the traffic information message processing method including the steps of: receiving the traffic information message; searching a memory in order to obtain information corresponding to the message; and displaying the obtained information to a user, wherein, when the message is a location-related message, the step of searching the memory includes the sub-steps of: checking the message and basic information included in a header field of location data stored in the message, thereby recognizing address information of search-requiring information; searching fields corresponding to required information based on the recognized address information; and obtaining the required information by identifying location codes stored in the searched fields.

By the present invention having a construction as described above, it is possible to store search-requiring data according to one established classification standard, minimize repetition in storage of data, and reduce load to a memory of a receiver.

The above and other objects, features and advantages of the present invention will be more apparent from the following detailed description taken in conjunction with the accompanying drawings, in which:
FIG. 1 is a flow diagram illustrating an example of a method for information search by a related art traffic information receiver;
FIG. 2 is a schematic conceptual view illustrating a traffic information providing service according to an embodiment of the present invention;
FIG. 3 is a block diagram of a traffic information receiving apparatus according to an exemplary embodiment of the present invention;
FIG. 4 is a block diagram illustrating the structure of location data according to an exemplary embodiment of the present invention;
FIG. 5 is a table containing location data according to an exemplary embodiment of the present invention;
FIG. 6 is a flow diagram illustrating a method of processing a traffic information message according to an exemplary embodiment of the present invention; and
FIG. 7 is a flow diagram illustrating a method for processing a received traffic information message, mainly data of the message, by a terminal according to an exemplary embodiment of the present invention.

Hereinafter, a storage medium for a traffic information receiver, a traffic information message receiver, and a method for processing a traffic information message according to the present invention will be described with reference to the accompanying drawings.

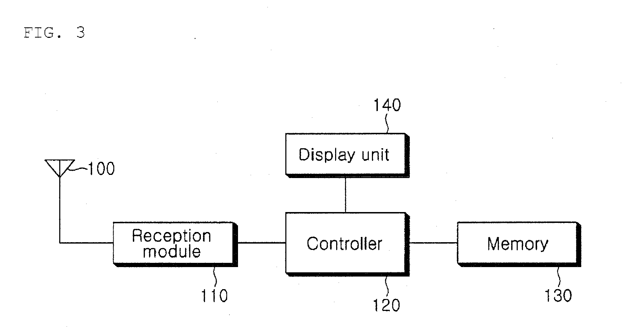

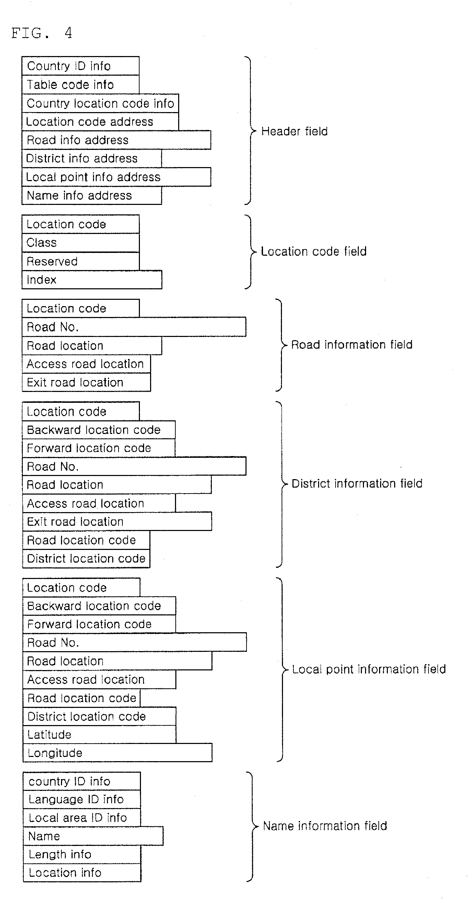

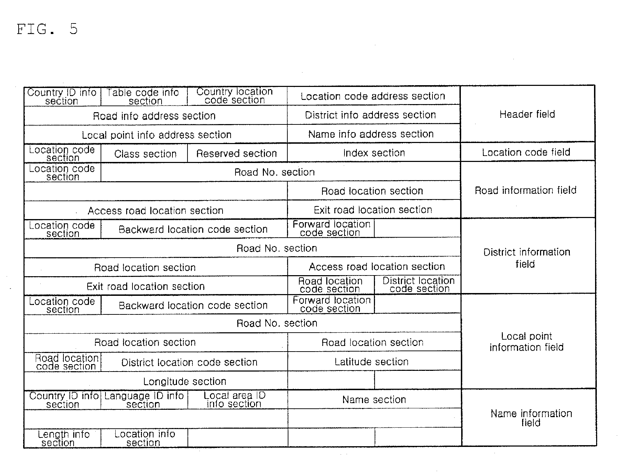

FIG. 2 is a schematic conceptual view illustrating a traffic information providing service according to an embodiment of the present invention, FIG. 3 is a block diagram of a traffic information receiving apparatus according to an exemplary embodiment of the present invention, FIG. 4 is a block diagram illustrating the structure of location data according to an exemplary embodiment of the present invention, and FIG. 5 is a table containing location data according to an exemplary embodiment of the present invention.

As shown in the drawings, in a Traffic Message Channel (TMC) service according to the present invention, traffic information 10 collected by a service provider is made into a traffic information message. The traffic information message includes multiple streams of numbers (or may include letter strings) in a predetermined format. The traffic information message is transferred from a traffic information center 20 to a radio broadcasting station, and the radio broadcasting station transmits the message through a radio wave by using a transmission medium 30.

A traffic information receiver 40 receives the transmitted traffic information message and interprets the meaning of the traffic information message, thereby providing the message to a user 50 in a form that can be understood by the user 50.

In order to convert the traffic information transmitted in a predefined form into the form that can be recognized by the user 50, the traffic information receiver has the structure as shown in FIG. 3.

Referring to FIG. 3, a traffic information receiver according to the present invention includes an antenna 100 for receiving a radio wave signal and a reception module 110 for receiving the signal received through the antenna 100 and converting the signal into a predetermined form.

Also, the reception module is connected to a controller 120 for extracting the traffic information message from the radio wave signal and converting the message into a form that can be recognized by the user. The controller 120 recognizes the meaning of the traffic information message from information data stored in a memory 130 connected to the controller 120 and displays the recognized meaning on a display unit 140. That is, the controller 120 searches the traffic information message from the information data of the memory 130 and displays it to the user.

FIG. 4 illustrates the structure of location data from among the information data stored in the memory.

As shown, the location data includes a header field. Various types of address information of the stored data and other basic information are recorded in the header field. The address information indicates the local position of each data item within the location data.

The address information includes a location code, road information, district information, local point information, and name information, which are separately stored in a location code address section, a road information address section, a district information address section, a local point information address section, and a name information address section, respectively.

Further, the other basic information recorded in the header field includes country identification information containing a country identification code, table code information indicating the type of the stored data, and country location code information containing the number of codes included in each corresponding country. These information items are also separately stored in a country identification information section, a table code information section, and a country location code information section, respectively.

Meanwhile, the location data includes a location code field.

The location code field stores basic common information and location code information and has a location code section for storing the location code information. The location code indicates a location included in the traffic information message. By using the location code, it is possible to search information of the corresponding position from the location data. Therefore, it is preferred that the location code is always stored in each of the data area.

The basic common information refers to basic necessary information for searching, which includes a code identifier, a table code, etc.

Further, the location code field includes a class section storing data identifying the type of the data included in the location data. Furthermore, the location code field includes an index section for storing an index of information, and may include a reserved storage space.

Meanwhile, the location data includes a road information field. The road information field stores basic common information and information about the road at a corresponding position, and includes a location code section, a road number section, a road location section, an access road location section, and an exit road location section.

The location code section stores the location code information as described above, the road number section stores a specific number given to a road of a corresponding location, and the road location section stores location information of the road. Further, the access road location section and the exit road location section store information about any access road to the road and any exit road from the road, respectively.

Meanwhile, the location data includes a district information field. The district information field stores basic common information and information about a district to which the roads belong. As shown, the district information field includes a location code section, a backward location code section, a forward location code section, a road number section, a road location section, an access road location section, an exit road location section, a road location code section, and a district location code section.

Here, the same as the above description can be applied to the location code section, the road number section, the road location section, the access road location section, and the exit road location section. The backward location code section stores location code information of a district in an opposite direction of a corresponding position, and the forward location code section stores location code information of a district in the same direction of the corresponding position. The road location code section stores code information of a currently input road position, and the district location code section stores location code information of a currently input district.

Here, by repeatedly storing the road number section, the road location section, the access road location section, and the exit road location section in the district information field (the same as those in the road information field), it is possible to get desired information, such as the location or number of a road, by searching only one of the road information field and the district information field in the case of a particular message. Of course, it is also possible to store the data only once together with the positions at which the data are stored, instead of repeatedly storing the data. That is, the road number section of the district information field may contain only address information indicating the position of the road number section stored in the road information field, without storing the actual road number. The same can be applied to the local point information field and the name information field. Then, it is possible to reduce the quantity of stored data, but a more complicated processing mechanism is necessary. Therefore, data to be excluded from the repetition is determined in consideration of the use frequency of the data.

Meanwhile, the location data includes a local point information field. The local point information field stores basic common information and data related to the location and coordinates, such as latitude and longitude. As shown in FIG. 4, the local point information field includes a location code section, a backward location code section, a forward location code section, a road number section, a road location section, an access road location section, a road location code section, a district location code section, a latitude section, and a longitude section.

Here, the same as the above description can be applied to the backward location code section, the forward location code section, the road number section, the road location section, the access road location section, the road location code section, and the district location code section. The latitude section stores latitude information of each local point, and the longitude section stores longitude information of each local point.

Further, the location data includes a name information field. The name information field stores basic common information and name information of each road, including a name ID and bit stream.

As shown in FIG. 4, the name information field includes a country identification information section, a language identification information section, a local area identification information section, a name section, a length information section, and a location information section. The same description as that of the header field can be applied to the country identification information section in the name information field. The language identification information section stores information about various languages, and it is possible to search the language identification information section in order to find a language to be displayed in accordance with the language used in traffic broadcasting.

Further, the local area identification information section stores local area information used to identify the location of a local area, such as a country or a city.

Moreover, the name section stores the actual name of the road, district, and local point, and the length information section stores the length of the data stored in the name section.

Also, the name information field may further include a location information section storing a location of the data included in the name information field, in order to facilitate the search in consideration of the fact that the quantity of the data stored in the name information field is very large.

FIG. 5 illustrates the location data stored in a format of a table.

As shown in FIG. 5, the location data includes a header field, a location code field, a road information field, a district information field, a local point information field, and a name information field, each of which includes their own sectional data with proper data lengths. The location data stored in a format of a table as described above enables a user to easily find the location of corresponding data, and to easily revise the data or easily add more information to the data.

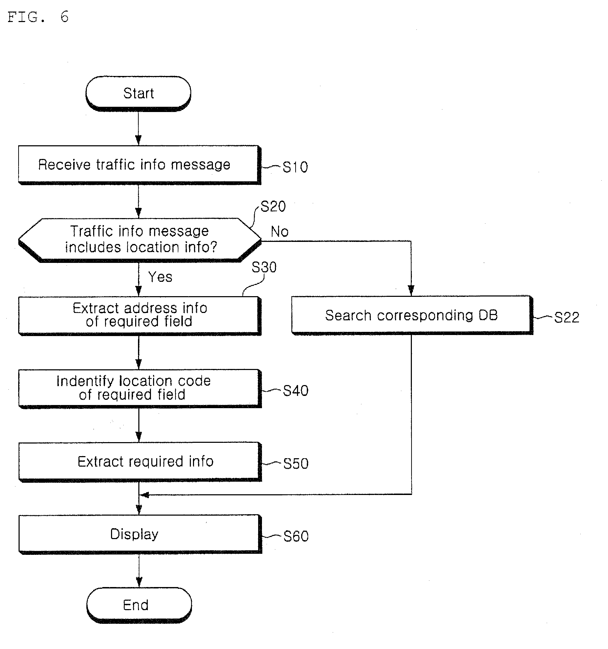

FIG. 6 is a flow diagram illustrating a method of processing a traffic information message according to an exemplary embodiment of the present invention.

Referring to FIG. 6, first, a reception module receives a traffic information message in order to process the traffic information message according to an exemplary embodiment of the present invention (step S10).

Then, the controller 120 determines if the received traffic information message includes location information (step S20). When the message does not include location information, the controller 120 searches a corresponding database and displays an extract result through the display unit 140 (step S22). The present invention relates to a method for processing data related to location information among the traffic information message, so no more detailed description will be given about processing of the message that does not include the location information.

Meanwhile, when the traffic information message includes location information, the controller 120 searches the header field of the location data and extracts address information of a section including the information to be obtained from the header field (step S30).

According to an exemplary embodiment of the present invention, the address information may be extracted from one of the location code field, the road information field, the district information field, the local point information field, and the name information field.

Next, the controller 120 identifies a location code of the field corresponding to the address information and a location code included in the traffic information message, thereby finding the searched information (step S40). Then, the controller 120 extracts the found information (step S50).

Then, the controller displays the extracted information through the display unit 140, so that the user can recognize the information (step S60).

Meanwhile, according to another embodiment of the present invention, the address sections of the header field may include addresses of corresponding information, respectively, so that the user can directly recognize the location of the information to be searched by searching the header field.

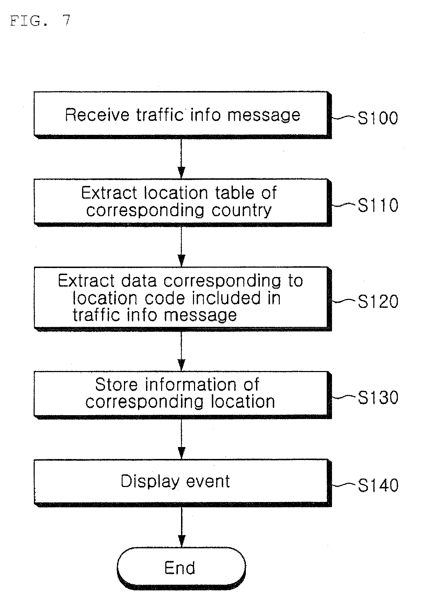

FIG. 7 is a flow diagram illustrating a method for processing a received traffic information message, mainly data of the message, by a terminal according to an exemplary embodiment of the present invention.

Referring to FIG. 7, first, a traffic information receiving apparatus (or a terminal) according to an exemplary embodiment of the present invention receives a traffic information message (step S100).

The traffic information message includes a location information table number, a location code, etc. The location information table number refers to a number of a table corresponding to the traffic information message from among location information tables made and stored according to countries, and the location code refers to a code of a corresponding position, at which an event has occurred within the location information table.

When the traffic information message has been received, a location information table of a country corresponding to the location information table number is extracted (step S110).

Then, data corresponding to the location code included in the traffic information message is extracted from the location information table (step S120).

Then, the extracted data are stored (step S130), and the event included in the traffic information message is displayed together with the stored data (step S140).

As described above, the present invention provides a storage medium for a traffic information receiver, an apparatus for receiving traffic information, and a method for processing traffic information, which are expected to have the following effects.

That is, it is possible to store data according to one standard of classification, thereby minimizing repeated storage of data and reducing the load of the memory of a receiver. Specifically, a conventional traffic information receiver that must store local area information of various countries, such as the European traffic information receiver, requires a storage capacity of about 37 Mbytes in order to store the local area information. However, a storage medium according to the present invention requires only a storage capacity of about 10 Mbytes.

Further, according to the present invention, it is possible to find and extract necessary information from a predefined table, thereby reducing the data processing time. Therefore, it is possible to display a traffic information message to a user instantly after receiving the traffic information message.

## Claims

1. A storage medium for a traffic information receiver, which stores data to be used for analysis of a traffic information message, the storage medium comprising location information, which comprises:
a header field for recording address information of stored data and basic information of the data;
a location code field for recording information about a location code of the data;
a road information field for recording information of a corresponding road;
a district information field for recording district information of the road;
a local point information field for recording data about the location of the road; and
a name information field for recording information about a name and a local area of the road.

2. The storage medium for a traffic information receiver as claimed in claim 1, wherein the header field comprises:
a country identification information section for storing country identification codes of countries;
a table code information section indicating the type of the stored data;
a country location code information section for storing the number of codes included in each corresponding country; and
an address information part for recording locations at which the data are stored.

3. The storage medium for a traffic information receiver as claimed in claim 2, wherein the address information part comprises:
a location code address section for recording locations at which location codes are stored;
a road information address section for recording locations at which road information is stored;
a district information address section for recording locations at which district information is stored;
a local point information address section for recording locations at which local point information is stored; and
a name information address section for recording locations at which name information is stored.

4. The storage medium for a traffic information receiver as claimed in any of claims 1 to 3, wherein the location code field comprises:
a location code section for storing location code information;
a class section for identifying the type of stored data; and
an index section for storing index information of the stored data.

5. The storage medium for a traffic information receiver as claimed in any of claims 1 to 4, wherein the road information field comprises:
a location code section for storing location code information;
a road number section for storing a number given to each road;
a road location section for storing a location of a corresponding road;
an access road location section for storing a location of an access road to the corresponding road; and
an exit road location section for storing a location of an exit road from the corresponding road.

6. The storage medium for a traffic information receiver as claimed in any of claims 1 to 5, wherein the district information field comprises:
a location code section for storing location code information;
a backward location code section for storing location code information of a district in an opposite direction of a corresponding position;
a forward location code section for storing location code information of a district in a same direction of the corresponding position;
a road location code section for storing code information of a currently input road position; and
a district location code section for storing district location code information of the currently input road position.

7. The storage medium for a traffic information receiver as claimed in claim 6, wherein the district information field further comprises:
a road number section for storing a number given to each road;
a road location section for storing a location of a corresponding road;
an access road location section for storing a location of an access road to the corresponding road; and
an exit road location section for storing a location of an exit road from the corresponding road.

8. The storage medium for a traffic information receiver as claimed in any of claims 1 to 7, wherein the local point information field comprises:
a location code section for storing location code information;
a road location code section for storing code information of a currently input road position;
a district location code section for storing district location code information of the currently input road position;
a latitude section for storing latitude information of each local point; and
a longitude section for storing longitude information of each local point.

9. The storage medium for a traffic information receiver as claimed in claim 8, wherein the local point information field further comprises:
a backward location code section for storing location code information of a district in an opposite direction of a corresponding position;
a forward location code section for storing location code information of a district in a same direction of the corresponding position;
a road number section for storing a number given to each road;
a road location section for storing a location of a corresponding road; and
an access road location section for storing a location of an access road to the corresponding road.

10. The storage medium for a traffic information receiver as claimed in any of claims 1 to 9, wherein the name information field comprises:
a country identification information section for storing country identification codes of countries;
a language identification information section for storing data of languages used for the countries;
a local area identification information section for storing local area information;
a name section for storing name information of a corresponding road, district, and local point; and
a length information section for storing a length of the data stored in the name section.

11. The storage medium for a traffic information receiver as claimed in any of claims 1 to 10, wherein the location data is stored in a format of a table, which includes a header field, a location code field, a road information field, a district information field, a local point information field, and a name information field.

12. The storage medium for a traffic information receiver as claimed in claim 1, wherein the location data is stored in a table defined by
| | | | | | |
|---|---|---|---|---|---|
| Country ID info section | Table code info section | Country location code section | Location code address section | | Header field |
| Road info address section | | | District info address section | | |
| Local point info address section | | | Name info address section | | |
| Location code section | Class section | Reserved section | Index section | | Location code field |
| Location code section | Road No. section | | | | Road information field |
| Road location section | | | | | |
| Access road location section | | | Exit road location section | | |
| Location code section | Backward location, code section | | Forward location code section | | District information field |
| Road No. section | | | | | |
| Road location section | | | Access road location section | | |
| Exit road location section | | | Road location code section | District location code section | |
| Location code section | Backward location code section | | Forward location code section | | Local point information field |
| Road No. section | | | | | |
| Road location section | | | Road location section | | |
| Road location code section | District location code section | | Latitude section | | |
| Longitude section | | | | | |
| Country ID info section | Language ID info section | Local area ID info section | Name section Name section | | Name information field |
| | | | | | |
| Length info section | Location info section | | | | |

13. A traffic information receiver for receiving and analyzing a traffic information message and reporting the traffic information message to a user, the traffic information receiver comprising:
a reception module for receiving a radio signal;
a memory for storing information data corresponding to the received signal; and
a controller for searching for information data corresponding to the received signal in the memory and reporting the information data to the user,
wherein the information data comprises location data, which comprises:
a header field for recording address information of stored data and basic information of the data;
a location code field for recording information about a location code of the data;
a road information field for recording information of a corresponding road;
a district information field for recording district information of the road;
a local point information field for recording data about the location of the road; and
a name information field for recording information about a name and a local area of the road.

14. The traffic information receiver as claimed in claim 13, wherein the header field stores:
country identification codes of countries;
table code information indicating the type of the stored data;
country location code information corresponding to the number of codes included in each corresponding country; and
address information of stored data.

15. The traffic information receiver as claimed in claim 14, wherein the address information comprises location codes, road information, district information, local point information, and name information.

16. The traffic information receiver as claimed in claim 15, wherein the location code field stores:
location codes indicating location code information;
classes indicating the type of stored data; and
indexes of the stored data.

17. The traffic information receiver as claimed in any of claims 13 to 16, wherein the road information field stores:
location codes indicating location code information;
road numbers corresponding to roads;
a location of a corresponding road;
a location of an access road to the corresponding road; and
a location of an exit road from the corresponding road.

18. The traffic information receiver as claimed in any of claims 13 to 17, wherein the district information field stores:
location codes indicating location code information;
a backward location code indicating location code information of a district in an opposite direction of a corresponding position;
a forward location code indicating location code information of a district in a same direction of the corresponding position;
a road location code corresponding to a currently input road position; and
a district location code indicating district location code information of the currently input road position.

19. The traffic information receiver as claimed in any of claims 13 to 18, wherein the district information field further stores:
road numbers corresponding to roads;
a location of a corresponding road;
a location of an access road to the corresponding road; and
a location of an exit road from the corresponding road.

20. The traffic information receiver as claimed in any of claims 13 to 19, wherein the local point information field stores:
location codes indicating location code information;
a road location code corresponding to a currently input road position; and
a district location code indicating district location code information of the currently input road position;
latitude information of each local point; and
longitude information of each local point.

21. The traffic information receiver as claimed in claim 20, wherein the local point information field further stores:
a backward location code indicating location code information of a district in an opposite direction of a corresponding position;
a forward location code indicating location code information of a district in a same direction of the corresponding position;
road numbers corresponding to roads;
a location of a corresponding road; and
a location of an access road to the corresponding road.

22. The traffic information receiver as claimed in any of claims 13 to 21, wherein the name information field stores:
country identification codes of countries;
language identification information indicating data of languages used for the countries;
local area identification information corresponding to local area information;
name information of a corresponding road, district, and local point; and
information about a length of the name information.

23. The traffic information receiver as claimed in any of claims 13 to 22, wherein the location data is stored in a format of a table, which includes a header field, a location code field, a road information field, a district information field, a local point information field, and a name information field.

24. The traffic information receiver as claimed in claim 13, wherein the location data is stored in a table defined by
| | | | | | |
|---|---|---|---|---|---|
| Country ID info section | Table code info section | Country location code section | Location code address section | | Header field |
| Road info address section | | | District info address section | | |
| Local point info address section | | | Name info address section | | |
| Location code section | Class section | Reserved section | j-ndex section | | Location code field |
| Location code section | Road No. section | | | | Road information field |
| | | | Road location section | | |
| Access road location section | | | Exit road location section | | |
| Location code section | Backward location code section | | Forward location code section | | District information field |
| Road No. section | | | | | |
| Road location section | | | Access road location section | | |
| Exit road location section | | | Road location code section | District location code section | |
| Location code section | Backward location code section | | Forward location code section | | Local point information field |
| Road No. section | | | | | |
| Road location section | | | Road location section | | |
| Road location code section | District location code section | | Latitude section | | |
| Longitude section | | | | | |
| country ID info section | Language ID info section | Local area ID info section | Name section | | Name information field |
| | | | | | |
| Length info section | Location info section | | | | |

25. A traffic information message processing method for receiving and analyzing a traffic information message and reporting the traffic information message to a user, the traffic information message processing method comprising the steps of:
receiving the traffic information message;
searching a memory in order to obtain information corresponding to the message; and
displaying the obtained information to a user,
wherein, when the message is a location-related message, the step of searching the memory comprises the sub-steps of:
recognizing address information of search-requiring information by checking the message and basic information included in a header field of location data stored in the message;
searching fields corresponding to required information based on the recognized address information; and
obtaining the required information by identifying location codes stored in the searched fields.

26. The traffic information message processing method as claimed in claim 25, wherein the location data is stored in a format of a table, which includes a header field, a location code field, a road information field, a district information field, a local point information field, and a name information field.

27. The traffic information message processing method as claimed in claim 26, wherein the header field comprises:
a country identification information section for storing country identification codes of countries;
a table code information section indicating the type of the stored data;
a country location code information section for storing the number of codes included in each corresponding country; and
an address information part for recording locations at which the data are stored.

28. The traffic information message processing method as claimed in claim 27, wherein the address information part comprises:
a location code address section for recording locations at which location codes are stored;
a road information address section for recording locations at which road information is stored;
a district information address section for recording locations at which district information is stored;
a local point information address section for recording locations at which local point information is stored; and
a name information address section for recording locations at which name information is stored.

29. The traffic information message processing method as claimed in any of claims 26 to 28, wherein the location code field comprises:
a location code section for storing location code information;
a class section for identifying the type of stored data; and
an index section for storing an index information of the stored data.

30. The traffic information message processing method as claimed in any of claims 26 to 29, wherein the road information field comprises:
a location code section for storing location code information;
a road number section for storing a number given to each road;
a road location section for storing a location of a corresponding road;
an access road location section for storing a location of an access road to the corresponding road; and
an exit road location section for storing a location of an exit road from the corresponding road.

31. The traffic information message processing method as claimed in any of claims 26 to 30, wherein the district information field comprises:
a location code section for storing location code information;
a backward location code section for storing location code information of a district in an opposite direction of a corresponding position;
a forward location code section for storing location code information of a district in a same direction of the corresponding position;
a road number section for storing a number given to each road;
a road location section for storing a location of a corresponding road;
an access road location section for storing a location of an access road to the corresponding road;
an exit road location section for storing a location of an exit road from the corresponding road;
a road location code section for storing code information of a currently input road position; and
a district location code section for storing district location code information of the currently input road position.

32. The traffic information message processing method as claimed in any of claims 26 to 31, wherein the local point information field comprises:
a location code section for storing location code information;
a backward location code section for storing location code information of a district in an opposite direction of a corresponding position;
a forward location code section for storing location code information of a district in a same direction of the corresponding position;
a road number section for storing a number given to each road;
a road location section for storing a location of a corresponding road;
an access road location section for storing a location of an access road to the corresponding road;
a road location code section for storing code information of a currently input road position;
a district location code section for storing district location code information of the currently input road position;
a latitude section for storing latitude information of each local point; and
a longitude section for storing longitude information of each local point.

33. The traffic information message processing method as claimed in any of claims 26 to 32, wherein the name information field comprises:
a country identification information section for storing country identification codes of countries;
a language identification information section for storing data of languages used for the countries;
a local area identification information section for storing local area information;
a name section for storing name information of a corresponding road, district, and local point; and
a length information section for storing a length of the data stored in the name section.

34. A traffic information message processing method as claimed in 25 to 33, wherein the steps of recognizing address information and searching fields are executed by extracting and searching a location table of a country corresponding to the traffic information message.

35. The traffic information message processing method as claimed in claim 34, wherein the location table includes a header field, a location code field, a road information field, a district information field, a local point information field, and a name information field.

36. The traffic information message processing method as claimed in claim 35, wherein the location table is defined by
| | | | | | |
|---|---|---|---|---|---|
| Country ID info section | Table code info section | Country location code section | Location code address section | | Header field |
| Road info address section | | | District info address section | | |
| Local point info address section | | | Name info address section | | |
| Location code section | Class section | Reserved section | Index section | | Location code field |
| Location code section | Road No. section | | | | Road information field |
| | | | Road location section | | |
| Access road location section | | | Exit road location section | | |
| Location code section | Backward location code section | | Forward location code section | | District information field |
| Road No. section | | | | | |
| Road location section | | | Access road location section | | |
| Exit road location section | | | Road location code section | District location code section | |
| Location code section | Backward location code section | | Forward location code section | | Local point information field |
| Road No. section | | | | | |
| Road location section | | | Road location section | | |
| Road location code section | District location code section | | latitude section | | |
| Longitude section | | | | | |
| Country ID info section | Language ID info section | Local area ID info section | Name section | | Name information field |
| | | | | | |
| Length info section | Location info section | | | | |
